# EUROPEAN PATENT SPECIFICATION

(11) **EP 2 907 151 B1**
(45) Date of publication and mention of the grant of the patent: **04.12.2019**
(21) Application number: 13844985.5
(22) Date of filing: 10.10.2013
(51) Int. Cl.: H01H 9/54, H01R 13/703, H01R 24/76, H05B 37/02, H02J 13/00

(54) **CONNECTOR HAVING WIRELESS CONTROL CAPABILITIES**
VERBINDER MIT DRAHTLOSEN STEUERUNGSFUNKTIONEN
CONNECTEUR AYANT DES CAPACITÉS DE COMMANDE SANS FIL

(30) Priority: 12.10.2012 US 201213650757
(43) Date of publication of application: 19.08.2015
(73) Proprietor: Ideal Industries Inc., Sycamore, IL 60178 (US)
(72) Inventor: BELLO, Nolan, North Aurora, IL 60542-8950 (US); KESWANI, Sushil N., Sycamore, IL 60178 (US)
(74) Representative: Samson & Partner Patentanwälte mbB
(86) International application number: PCT/US2013/064303
(87) International publication number: WO 2014/059122

(56) References cited:
- EP-A1- 2 793 323
- US-A- 5 315 533
- US-A- 5 598 039
- US-A1- 2004 084 972
- US-A1- 2007 247 086
- US-A1- 2009 014 625
- US-A1- 2009 017 694
- US-A1- 2010 148 591
- US-A1- 2012 049 639
- US-A1- 2012 112 654
- US-A1- 2012 133 217
- US-A1- 2013 229 067

## Description

### Field of the Disclosure

The present description relates generally to a wireless smart connector and more particularly to a connector having wireless control capabilities.

### Background of Related Art

The subject disclosure is generally related to electrical connectors and, more particularly, to an electrical connector having wireless control capabilities for use in connection with an alternating current (AC) power system.

Systems for bringing low-voltage direct current (DC) power to low-voltage DC powered devices, such as light fixtures, sensors, or the like, are known in the art. By way of example, US Patent No. 7,997,910, US Patent No. 8,062,042, US Patent No. 7,679,222, and US Patent No. 7,762,821 disclose various grid systems that support conductive materials that are electrically coupled to a low-voltage DC power source and which provide contact surfaces that are connectable to low-voltage DC powered devices. These patents also describe various types of connectors that provide a means for coupling a low-voltage DC powered device to the contact surfaces of the grid system.

In addition, systems and methods of providing an adaptor for bringing wireless communication to a wired sensor include the use of a sensor interface, such as described in US Patent No. 8,275,471, US Patent No. 7,839,017, US Patent No. 7,925,384, US Patent Publication No. 2011/0043052, and US Patent Publication No. 2011/0043052. In at least one example, the referenced publications describe a system and method for enabling wireless communication with a wired sensor. In this example, power is continuously supplied to an electrical load device under control of a separate wireless controller. The wireless controller includes information stored and/or detected to directly control the electric load device.

Sill further, U.S. Patent No. 6,990,394 describes a control system for allowing remote control of a load. In the described example, a light fixture includes a lamp controller which controls the operation of a lamp by selectively coupling the power source to the lamp. The lamp controller selectively operates the lamp in response to signals received from a remote controller and a light switch, as well as from a motion sensor and a photo sensor.

While the described connectors, systems and methods generally work for their intended purpose, the following describes an improvement to the known connectors for use in such similarly constructed systems.

### Summary

Described hereinafter is an improved push-in type connector which, among other advantages, has the advantage of allowing for wireless control of and the bringing of power to an AC voltage fixture. The connector is well suited for both retrofit/rehabilitation installations as well as for new construction. While not intended to be limiting, the subject connectors may be used to couple an AC powered device to any suitable AC powered wireless control system, to any suitable AC power cables, and/or to other disconnection/connection points in an AC power system. The subject connectors may be provided with one or more mechanical terminal structures, such as for example, push-in type terminal connectors, to thereby allow the subject connectors to be easily and releasably attached thereto.

While the foregoing provides a general description of the subject connector, a better understanding of the objects, advantages, features, properties, and relationships of the subject connector will be obtained from the following detailed description and accompanying drawing which set forth an illustrative example and which is indicative of the various ways in which the principles of the invention may be employed.

### Brief Description of the Drawings

For a better understanding of the subject invention, reference may be had to the following drawings in which:
FIG. 1 illustrates a schematic diagram of exemplary components of a connector having wireless communication capabilities.
FIG. 2 illustrates a schematic diagram of exemplary components of the connector having wireless communication capabilities including an environmental sensor directly coupled to the connector.
FIG. 3 illustrates a schematic diagram of exemplary components of the connector having wireless communication capabilities including an environmental sensor indirectly coupled to the connector.

### Detailed Description

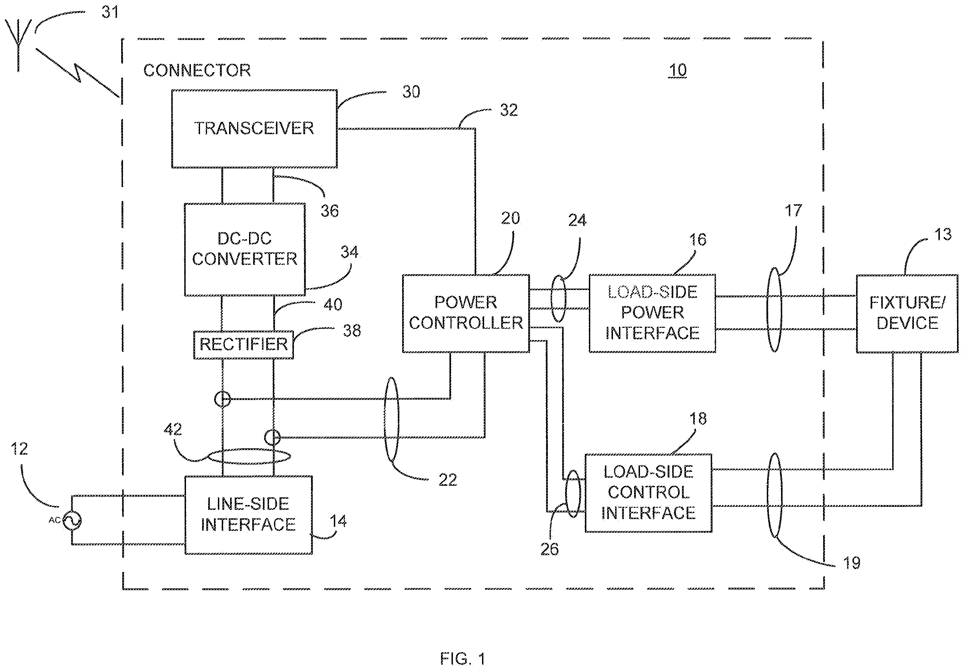

Turning now to the FIG. 1, a schematic diagram of an exemplary connector 10 for use in bringing power from a power source 12, such as an alternating current (AC) power source to a powered fixture or device 13, such as a light fixture, sensor, or the like, is illustrated.

For allowing the connector 10 to be coupled to the power source 12, the connector 10 includes a line-side interface 14 comprised of one or more electrical contacts arranged to allow engagement with corresponding electrical conductors or surfaces associated with the power source 12. The electrical contacts of the line-side interface 14 may be incorporated into a housing, such as for example a non-conductive housing, having mechanical structures as needed to allow the connector 10 to be releasably attached to a power grid system, power cables, and/or to other disconnection/connection points in a power system. While not limiting, the wireless connector 10 may also be attached to conductors, such as wires, associated with the source of AC power through use of insulation piercing type contacts (IPC type contacts), insulation displacing type contacts (IDC type contacts), push-in type contacts, crimp type contacts, weld type contacts, etc.

For allowing the connector 10 to be coupled to the powered device 13, the connector 10 includes a load-side power interface 16 and a load-side control interface 18 comprising one or more electrical contacts (which one or more electrical contacts may be incorporated into the same or a further housing having mechanical structures as needed) adapted to be engaged with wires 17, 19, respectively, plugs, or the like, that are associated with the powered device 13. The example load-side power interface provides AC power to the device 13, while the example load-side control interface 18 provide a control signal, such as for example, a dim, flash, brighten, chase, turn on, turn off, etc. control signal.

While the load-side power interface 16 and the load-side control interface 18 are illustrated in the present example as separate components, it will be appreciated by one of ordinary skill in the art that the interfaces 16, 18 may be integrally and/or separately formed as desired. Additionally, each of the electrical contacts and/or wires 17, 19, may be otherwise combined and/or separated. Still further, without limitation, the electrical contacts of the load-side interface 16 and/or the load-side control interface 18 may be push-in type contacts, IDC type contacts, IPC type contacts, crimp type contacts, weld type contacts, etc.

To control the bringing of power from the line-side interface 14 to the load-side power interface 16, and accordingly to the device 13 coupled to the load-side interface 16, the connector 10 further includes a controller 20. As illustrated in FIG. 1, the example controller 20 is electrically coupled to the line-side interface 14 via an electrical connection 22 and is electrically coupled to the load-side interface 16 via an electrical connection 24. In addition, to provide control instructions and/or signals to the load-side control interface 18, the controller 20 is coupled to the load-side control interface 18 via an electrical connection 26. By way of example only, the controller 20 may comprise a semiconductor based electronic device such as an Opto-isolator, silicon-controlled rectifier (SCR), field-effect transistor (FET), transistor, microelectromechanical systems (MEMS) switch, and/or any other suitable controller. Furthermore, as previously noted, while the load-side power interface 16 and the load-side control interface 18 may be integrally or separately formed as desired, it will be appreciated by one of ordinary skill in the art that the controller 20 may also be integrally formed with one or more of the interfaces as desired.

In this example, the controller 20 is further coupled to a receiver (e.g., a wireless receiver) or transceiver 30, which, as described hereinafter, functions to provide a control signal to the controller 20 via an electrical connection 32. Power is provided to the wireless receiver or transceiver 30 by means of an optional DC-DC converter 34, which is electrically coupled to the wireless receiver or transceiver 30 via an electrical connection 36 and to the line-side interface 14 via a rectifier 38 having an electrical connection 40 to the DC-DC converter 34 and an electrical connection 42 to the line-side interface 14. The wireless receiver or transceiver 30 may also be directly coupled to the line-side interface 14 and/or the rectifier 38 as desired. It will also be understood that other means for providing power to the wireless receiver or transceiver 30 could also be employed, such as by providing power through use of a battery, through use of ambient radio frequency (RF) power harvesting, or the like. It will also be understood that the electrical connections between the various components illustrated in FIG. 1 may be traces formed on a printed circuit board (PCB), wires, or the like without limitation.

More particularly, for controlling the bringing of power to the load-side interface 16 and/or for controlling the bringing of control signals to the load-side control interface 18, the wireless receiver or transceiver 30 is adapted to receive and transmit a control signal (e.g., a DC control signal) to the controller 20 via the electrical connection 32 in response to the wireless receiver or transceiver 30 receiving a control signal from a remotely located device 31, e.g., a switch, control center, or the like. In one example, the remotely located device and the wireless receiver or transceiver 30 are adapted to communicate via use of wireless RF transmissions. The controller 20 is, in turn, adapted to respond to the control signal transmitted thereto via the electrical connection 32 to control the bringing of power to the load-side interface 16 from the line-side interface 14 via the electrical connections 22 and 24. Additionally, the controller 20 is adapted to respond to the control signal transmitted thereto via the electrical connection 32 to control the bringing of a control signal to the load-side control interface 18 via the electrical connection 26.

In this regard, the control signal provided to the controller 20 by the wireless receiver or transceiver 30 is used to turn on or turn off the power connection between the load-side power interface 16 and the line-side interface 14. Furthermore, the control signal provided to the controller 20 by the wireless receiver or transceiver 30 may also be used to provide a controlling signal to the load-side control interface 18 to limit and/or otherwise modify or control the amount of power that is provided to the device 13 e.g., to provide for a dimming effect. Specifically, in at least one example, the load-side control interface may reduce (e.g., dim) the output AC voltage by chopping the AC output for typical incandescent light. Still further, the load-side control interface may provide an analog (e.g., 0 to 10) volt variable output to dim fluorescent lights.

It will also be appreciated that, in the case when a transceiver 30 is utilized, the connector 10 may allow for state data associated with the controller 20, and accordingly the device 13, and/or other data to be communicated to other remotely located devices as needed. While not illustrated, the connector 10 may additionally include a mechanism or other means for allowing a user to set (or for pre-setting at a time of manufacture) an address to thereby allow communications to the connector 10, via the receiver or transceiver 30, to be specifically targeted thereto - which would be particularly useful in an instance where multiple connectors are intended to be used in a confined area.

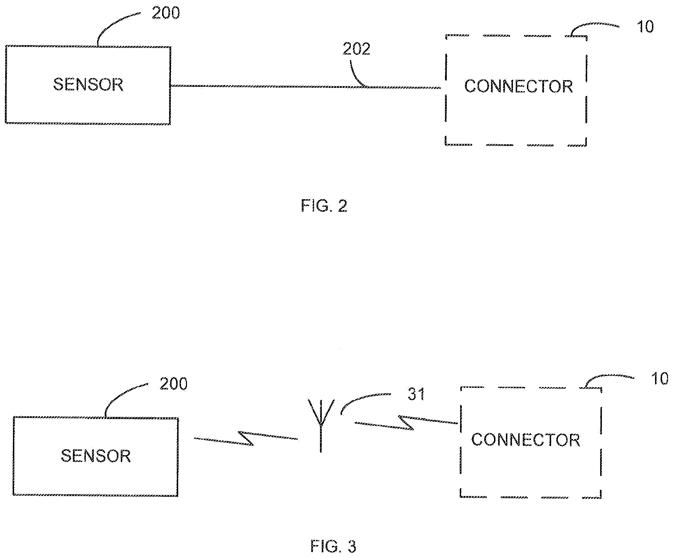

Turning now to FIGS. 2 and 3, for providing the connector 10 with environmental and/or status information, the connector 10 may be directly coupled to a sensor 200 via a communication link, such as for example, a wire 202 (FIG. 2). It will be appreciated by one of ordinary skill in the art, however, that the communication link may be wireless, wired, and/or other suitable link as desired. For example, the sensor 200 may be capable of communicating directly with the transceiver 30 or may communicate directly with the controller 20. Still further, as illustrated in FIG. 3, the sensor 200 may be adapted to communicate directly with the remotely located device 31, which in turn communicates with the connector 10 as described hereinabove.

In the example of FIGS. 2 and 3, the sensor 200 may be adapted to sense an environmental condition, such as a temperature, motion, light level, time of day, etc., and communicate the sensed condition to the connector 10 (either directly or indirectly as shown) for influencing the ultimate performance of the device 13. For example, the sensor 200 may detect an ambient light of the room in which the sensor 200 is installed and relay that the relevant information to the connector 10 for influencing the load -side power interface 16 and/or the load-side control interface 18, which in turn influences the performance state of the device 13. In this way, the connector 10 may be "smart" in that the connector 10 is able to influence the performance of the fixture device to which it is connected in response to an external stimuli.

While specific examples of the present disclosure have been described in detail, it will be appreciated by those of ordinary skill in the art that various modifications and alternatives to those details could be developed in light of the overall teachings of this disclosure. It will therefore be appreciated that features described are not to be limited to any particular embodiment but may be freely used across embodiments where applicable. Additionally, it will be appreciated that the size, shape, arrangement, and/or number of components illustrated and described can be changed as necessary to meet a given need. Accordingly, the particular arrangements disclosed are meant to be illustrative only and not limiting as to the scope of the invention which is to be given the full breadth of the appended claims and any equivalents thereof.

## Claims

1. A connector (10) for connecting a source of alternating current (AC) power to a powered device (13) located external to the connector, comprising:
a line-side interface (14) having one or more electrical contacts arranged for electrically coupling the connector to a one or more corresponding electrical conductors associated with the source of AC power;
a load-side power interface (16) having one or more electrical contacts arranged for electrically coupling the connector to a one or more corresponding electrical conductors associated with the powered device;
a load-side control interface (18) having one or more electrical contacts arranged for electrically coupling the connector to a one or more corresponding electrical conductors associated with the powered device;
a controller (20) electrically coupled to the line-side interface, the load-side power interface, and the load-side control interface and operable to control a bringing of AC power to the load-side power interface from the line-side interface for provision to the one or more corresponding electrical conductors associated with the powered device via the one or more electrical contacts of the load-side power interface and operable to control a bringing of a control signal (26) to the load-side control interface for provision to the one or more corresponding electrical conductors associated with the powered device via the one or more electrical contacts of the load-side control interface; and
a receiver (30) electrically coupled to the controller for receiving a first signal from a controlling (31) external to the connector and for generating, in response thereto, a second signal (32) for controlling the operations of the controller.

2. The connector as recited in claim 1, wherein the one or more electrical contacts of the line-side interface are arranged for releasably and electrically coupling the connector to the one or more corresponding electrical conductors associated with the source of AC power.

3. The connector as recited in claim 1, wherein the one or more electrical contacts of at least one of the load-side power interface and the load-side control interface comprises at least one of a push-in type contact, an IDC type contact, an IPC type contact, a crimp type contact, and a weld type contact for engaging a corresponding one or more wires associated with the powered device.

4. The connector as recited in claim 1, wherein the controller provides an electrical signal to the load-side control interface to function as an on/off for a power controller.

5. The connector as recited in claim 1, wherein the controller provides an electrical signal to the load-side control interface to control a dimming power controller.

6. The connector as recited in claim 1, wherein the controller comprises at least one of an Opto-isolator, an silicon-controlled rectifier (SCR), a field-effect transistor (FET), transistor, and a microelectromechanical systems (MEMS) switch.

7. The connector as recited in claim 1, further comprising a rectifier electrically coupled to the receiver and the line-side interface for providing power to the receiver.

8. The connector as recited in claim 7, further comprising a DC-DC converter electrically coupled between the rectifier and the receiver.

9. The connector as recited in claim 1, wherein the receiver is directly, electrically coupled to the line-side interface which provides power to the receiver.

10. The connector as recited in claim 1, further comprising a battery for providing power to the receiver.

11. The connector as recited in claim 1, wherein the receiver is an RF receiver.

12. The connector as recited in claim 1, wherein the receiver comprises a transceiver.

13. The connector as recited in claim 12, wherein the transceiver is an RF transceiver.

14. The connector as recited in claim 1, wherein the receiver is provided with an address.

15. The connector as recited in claim 14, comprising an address setting device associated with the receiver.

16. The connector as recited in claim 1, wherein at least two of the load-side power interface, the load-side control interface, and the controller are integrally formed.

17. The connector as recited in claim 1, further comprising a sensor (200) external to the connector and communicatively coupled to the connector for providing data indicative of a state of the sensor to the controller.

18. The connector as recited in claim 17, wherein the sensor communicates directly with the connector.

19. The connector as recited in claim 17, wherein the sensor communicates with an intermediate device (31), which in turn relays the data indicative of a state associated with the sensor to the connector.

## Patentansprüche

1. Verbinder (10) zum Verbinden einer Wechselstromquelle (AC) mit einer angetriebenen Vorrichtung (13), die außerhalb des Verbinders angeordnet ist, umfassend:
eine netzseitige Schnittstelle (14) mit einem oder mehreren elektrischen Kontakten, die zum elektrischen Koppeln des Verbinders mit einem oder mehreren entsprechenden elektrischen Leitern, die der Wechselstromquelle zugeordnet sind, angeordnet sind;
eine lastseitige Leistungsschnittstelle (16) mit einem oder mehreren elektrischen Kontakten, die zum elektrischen Koppeln des Verbinders mit einem oder mehreren entsprechenden elektrischen Leitern, die der angetriebenen Vorrichtung zugeordnet sind, angeordnet sind;
eine lastseitige Steuerschnittstelle (18) mit einem oder mehreren elektrischen Kontakten, die zum elektrischen Koppeln des Verbinders mit einem oder mehreren entsprechenden elektrischen Leitern, die der angetriebenen Vorrichtung zugeordnet sind, angeordnet sind;
eine Steuerung (20), die elektrisch mit der lastseitigen Schnittstelle, der netzseitigen Leistungsschnittstelle und der lastseitigen Steuerungsschnittstelle gekoppelt ist und betreibbar ist, um ein Einbringen von Wechselstrom in die lastseitige Leistungsschnittstelle von der netzseitigen Schnittstelle aus zu steuern, um einen oder mehrere entsprechende elektrische Leiter, die der angetriebenen Vorrichtung zugeordnet sind, über die einen oder mehreren elektrischen Kontakte der netzseitigen Leistungsschnittstelle bereitzustellen, und die betreibbar ist, um ein Einbringen eines Steuersignals (26) in die lastseitige Steuerungsschnittstelle zu steuern, um einen oder mehrere entsprechende elektrische Leiter, die der angetriebenen Vorrichtung zugeordnet sind, über die einen oder mehreren elektrischen Kontakte der lastseitigen Steuerungsschnittstelle bereitzustellen; und
einen Empfänger (30), der elektrisch mit der Steuerung gekoppelt ist, um ein erstes Signal von einer Steuerung (31) außerhalb des Verbinders zu empfangen, und um als Reaktion darauf ein zweites Signal (32) zum Steuern der Vorgänge der Steuerung zu erzeugen.

2. Verbinder nach Anspruch 1, worin der eine oder die mehreren elektrischen Kontakte der netzseitigen Schnittstelle angeordnet sind, um den Verbinder lösbar und elektrisch mit dem einen oder den mehreren entsprechenden elektrischen Leitern zu koppeln, die der Wechselstromquelle zugeordnet sind.

3. Der Verbinder nach Anspruch 1, wobei der eine oder die mehreren elektrischen Kontakte von mindestens einem der lastseitigen Leistungsschnittstelle und der lastseitigen Steuerschnittstelle mindestens einen von einem Steckkontakt, einem IDC-Kontakt, einem IPC-Kontakt, einem Crimpkontakt und einem Schweißkontakt zum Eingriff in einen entsprechenden einen oder mehrere der angetriebenen Vorrichtung zugeordnete Drähte umfassen.

4. Der Verbinder nach Anspruch 1, worin die Steuerung ein elektrisches Signal an die lastseitige Steuerschnittstelle liefert, um als Ein-/Aus-Leistungsregler zu fungieren.

5. Der Verbinder nach Anspruch 1, worin die Steuerung ein elektrisches Signal an die lastseitige Steuerschnittstelle liefert, um eine Dimmleistungssteuerung zu steuern.

6. Der Verbinder nach Anspruch 1, worin die Steuerung mindestens einen Optoisolator, einen siliziumgesteuerten Gleichrichter (SCR), einen Feldeffekttransistor (FET), einen Transistor und einen MEMS-Schalter (Mikroelektromechanische Systeme) umfasst.

7. Der Verbinder nach Anspruch 1, ferner umfassend einen Gleichrichter, der elektrisch mit dem Empfänger und der netzseitigen Schnittstelle gekoppelt ist, um dem Empfänger Energie zuzuführen.

8. Der Verbinder nach Anspruch 7, ferner umfassend einen DC-DC-Wandler, der elektrisch zwischen dem Gleichrichter und dem Empfänger gekoppelt ist.

9. Der Verbinder nach Anspruch 1, worin der Empfänger direkt und elektrisch mit der leitungsseitigen Schnittstelle gekoppelt ist, die den Empfänger mit Strom versorgt.

10. Der Verbinder nach Anspruch 1, ferner umfassend eine Batterie zum Bereitstellen von Strom für den Empfänger.

11. Der Verbinder nach Anspruch 1, worin der Empfänger ein HF-Empfänger ist.

12. Der Verbinder nach Anspruch 1, worin der Empfänger einen Sender-Empfänger umfasst.

13. Der Verbinder nach Anspruch 12, worin der Sender-Empfänger ein RF-Sender-Empfänger ist.

14. Der Verbinder nach Anspruch 1, worin der Empfänger mit einer Adresse versehen ist.

15. Der Verbinder nach Anspruch 14, umfassend eine dem Empfänger zugeordnete Adresseinstellvorrichtung.

16. Der Verbinder nach Anspruch 1, wobei mindestens zwei der lastseitigen Leistungsschnittstelle, der lastseitigen Steuerschnittstelle und der Steuerung integral ausgebildet sind.

17. Der Verbinder nach Anspruch 1, ferner umfassend einen Sensor (200) außerhalb des Verbinders und kommunikativ mit dem Verbinder gekoppelt, um der Steuerung Daten bereitzustellen, die einen Zustand des Sensors anzeigen.

18. Der Verbinder nach Anspruch 17, worin der Sensor direkt mit dem Verbinder in Verbindung steht.

19. Der Verbinder nach Anspruch 17, wobei der Sensor mit einer Zwischenvorrichtung (31) kommuniziert, die wiederum die Daten, die einen mit dem Sensor verbundenen Zustand anzeigen, an den Verbinder weiterleitet.

## Revendications

1. Connecteur (10) pour connecter une source d'alimentation en courant alternatif (AC) à un dispositif alimenté (13) qui est localisé de sorte qu'il est externe par rapport au connecteur, comprenant :
une interface de côté de ligne (14) qui comporte un ou plusieurs contact(s) électrique(s) qui est/sont agencé(s) pour coupler électriquement le connecteur à un ou plusieurs conducteur(s) électrique(s) correspondant(s) qui est/sont associé(s) à la source d'alimentation en courant alternatif ;
une interface d'alimentation de côté de charge (16) qui comporte un ou plusieurs contact(s) électrique(s) qui est/sont agencé(s) pour coupler électriquement le connecteur à un ou plusieurs conducteur(s) électrique(s) correspondant(s) qui est/sont associé(s) au dispositif alimenté ;
une interface de commande de côté de charge (18) qui comporte un ou plusieurs contact(s) électrique(s) qui est/sont agencé(s) pour coupler électriquement le connecteur à un ou plusieurs conducteur(s) électrique(s) correspondant(s) qui est/sont associé(s) au dispositif alimenté ;
un contrôleur (20) qui est couplé électriquement à l'interface de côté de ligne, à l'interface d'alimentation de côté de charge et à l'interface de commande de côté de charge et qui peut être rendu opérationnel de manière à ce qu'il commande un apport de l'alimentation en courant alternatif à l'interface d'alimentation de côté de charge depuis l'interface de côté de ligne pour réaliser une alimentation sur les un ou plusieurs conducteurs électriques correspondants qui sont associés au dispositif alimenté via les un ou plusieurs contacts électriques de l'interface d'alimentation de côté de charge, et qui peut être rendu opérationnel de manière à ce qu'il commande un apport d'un signal de commande (26) sur l'interface de commande de côté de charge pour réaliser une alimentation sur les un ou plusieurs conducteurs électriques correspondants qui sont associés au dispositif alimenté via les un ou plusieurs contacts électriques de l'interface de commande de côté de charge ; et
un récepteur (30) qui est couplé électriquement au contrôleur pour recevoir un premier signal en provenance d'une commande (31) qui est externe par rapport au connecteur et pour générer, en réponse à ce signal, un second signal (32) pour commander les opérations du contrôleur.

2. Connecteur selon la revendication 1, dans lequel les un ou plusieurs contacts électriques de l'interface de côté de ligne sont agencés pour coupler électriquement de manière libérable le connecteur aux un ou plusieurs conducteurs électriques correspondants qui sont associés à la source d'alimentation en courant alternatif.

3. Connecteur selon la revendication 1, dans lequel les un ou plusieurs contacts électriques d'au moins une interface prise parmi l'interface d'alimentation de côté de charge et l'interface de commande de côté de charge comprend au moins un contact pris parmi un contact du type par pression, un contact du type IDC, un contact du type IPC, un contact du type par sertissage et un contact du type par soudage pour engager un ou plusieurs fil(s) correspondant(s) qui est/sont associé(s) au dispositif alimenté.

4. Connecteur selon la revendication 1, dans lequel le contrôleur applique un signal électrique sur l'interface de commande de côté de charge de manière à ce qu'elle fonctionne en tant que moyen d'activation/de désactivation pour un contrôleur d'alimentation.

5. Connecteur selon la revendication 1, dans lequel le contrôleur applique un signal électrique sur l'interface de commande de côté de charge de manière à commander un contrôleur d'alimentation à variateur.

6. Connecteur selon la revendication 1, dans lequel le contrôleur comprend au moins un composant pris parmi un opto-isolateur, un redresseur commandé au silicium (SCR), un transistor à effet de champ (FET), un transistor et un commutateur à systèmes micro-électromécaniques (MEMS).

7. Connecteur selon la revendication 1, comprenant en outre un redresseur qui est couplé électriquement au récepteur et à l'interface de côté de ligne pour alimenter en électricité le récepteur.

8. Connecteur selon la revendication 7, comprenant en outre un convertisseur DC-DC qui est couplé électriquement entre le redresseur et le récepteur.

9. Connecteur selon la revendication 1, dans lequel le récepteur est couplé électriquement directement à l'interface de côté de ligne qui alimente en électricité le récepteur.

10. Connecteur selon la revendication 1, comprenant en outre une batterie pour alimenter en électricité le récepteur.

11. Connecteur selon la revendication 1, dans lequel le récepteur est un récepteur RF.

12. Connecteur selon la revendication 1, dans lequel le récepteur comprend un émetteur - récepteur.

13. Connecteur selon la revendication 12, dans lequel l'émetteur - récepteur est un émetteur - récepteur RF.

14. Connecteur selon la revendication 1, dans lequel le récepteur est muni d'une adresse.

15. Connecteur selon la revendication 14, comprenant un dispositif de définition d'adresse qui est associé au récepteur.

16. Connecteur selon la revendication 1, dans lequel au moins deux composants pris parmi l'interface d'alimentation de côté de charge, l'interface de commande de côté de charge et le contrôleur sont formés d'un seul tenant.

17. Connecteur selon la revendication 1, comprenant en outre un capteur (200) qui est externe par rapport au connecteur et qui est couplé en termes de communication au connecteur pour fournir des données qui sont indicatives d'un état du capteur au contrôleur.

18. Connecteur selon la revendication 17, dans lequel le capteur communique directement avec le connecteur.

19. Connecteur selon la revendication 17, dans lequel le capteur communique avec un dispositif intermédiaire (31), lequel à son tour relaie les données qui sont indicatives d'un état qui est associé au capteur au connecteur.
